# FASCICULE DE BREVET EUROPEEN

(11) **EP 0 942 346 B1**
(45) Date de publication et mention de la délivrance du brevet: **27.03.2002**
(21) Numéro de dépôt: 98403332.4
(22) Date de dépôt: 30.12.1998
(51) Int. Cl.: G05D 16/10, F16K 31/363, F16K 31/06

(54) **Soupape à trois voies pour régulation de pression**
Dreiwege-Druckregelventil
Three-way pressure control valve

(30) Priorité: 13.03.1998 FR 9803149
(43) Date de publication de la demande: 15.09.1999
(73) Titulaire: Industrie Mecanique pour les Fluides, 95600 Eaubonne (FR)
(72) Inventeur: Zsigmond, Zsolt, 95580 Margency (FR)
(74) Mandataire: Casalonga, Axel

(56) Documents cités:
- EP-A- 0 816 733
- GB-A- 2 282 212
- US-A- 5 454 233

## Description

La présente invention se rapporte à une soupape ou valve à trois voies pour régulation de pression de fluide, comprenant deux clapets montés en empilage axial dans un corps et actionnés par un composant moteur disposé à l'extérieur dudit corps.

On connaît des soupapes à trois voies de ce type dont les deux clapets montés en empilage axial reposent sur des portées d'étanchéité plates, l'équilibrage du clapet de décharge s'effectuant en passant par une chambre sous pression, laquelle communique avec l'intérieur d'un composant moteur, par exemple un électro-aimant proportionnel.

Un premier inconvénient de telles soupapes de régulation de pression réside dans le fait que le composant moteur se trouve sous la pression de service, de sorte que son enveloppe doit résister à la pression interne.

Un autre inconvénient concerne la caractéristique d'ouverture rapide des clapets plats, ce qui rend les appareils de ce type inadaptés à l'utilisation pour des hautes pressions.

La demande de brevet EP-A 0 816 733 révèle une soupape à trois voies pour régulation de pression de fluide, comprenant un ensemble de deux clapets qui sont montés en empilage axial, en étant mobiles axialement par rapport à deux sièges, dans un corps présentant trois chambres en enfilade, avec des trous de passage alignés dans les cloisons entre la première chambre et la deuxième chambre et entre la deuxième chambre et la troisième chambre, ainsi que dans les parois extérieures des première et troisième chambres, et qui sont actionnés par un composant moteur disposé à l'extérieur dudit corps, avec un premier ressort sollicitant le premier clapet contre le premier siège et avec un deuxième ressort écartant le deuxième clapet du deuxième siège.

La présente invention vise la réalisation d'une soupape à trois voies pour régulation de pression de fluide, du type à deux clapets montés en empilage axial, de telle manière que les clapets puissent être actionnés de l'extérieur des chambres sous pression par un composant moteur situé hors de la pression de service.

L'invention vise par ailleurs la réalisation d'une soupape à trois voies pour régulation de pression de fluide qui soit particulièrement adaptée à des fluides sous haute pression.

La soupape à trois voies pour régulation de pression de fluide, telle que revendiquée, comprend un ensemble de deux clapets qui sont montés en empilage axial, en étant mobiles axialement par rapport à deux sièges, dans un corps présentant trois chambres en enfilade, avec des trous de passage alignés dans les cloisons entre la première chambre et la deuxième chambre et entre la deuxième chambre et la troisième chambre, ainsi que dans les parois extérieures des première et troisième chambres, et qui sont actionnés par un composant moteur disposé à l'extérieur dudit corps, avec un premier ressort sollicitant le premier clapet contre le premier siège et avec un deuxième ressort écartant le deuxième clapet du deuxième siège. Selon l'invention, la soupape comprend un premier ensemble mobile comprenant un premier clapet monté mobile axialement dans la première chambre de manière à coopérer avec un premier siège défini par le trou entre la première chambre et la deuxième chambre, d'un côté du premier clapet une première tige montée coulissante de façon étanche dans le trou de la paroi extérieure de la première chambre et, sur le côté opposé, une deuxième tige qui traverse la deuxième chambre et est montée coulissante de façon étanche dans le trou de la cloison entre la deuxième chambre et la troisième chambre, le premier ensemble mobile étant traversé axialement sur toute sa longueur par un canal comprenant un premier alésage dans la première tige et un deuxième alésage dans la deuxième tige, cette dernière présentant au moins un orifice latéral dans la zone de la deuxième chambre. La soupape comprend, en outre, un deuxième ensemble mobile comprenant un deuxième clapet monté mobile axialement dans la troisième chambre de manière à coopérer avec un deuxième siège défini par le débouché du deuxième alésage à l'extrémité libre de la deuxième tige, d'un côté du deuxième clapet une troisième tige s'étendant avec du jeu depuis le deuxième clapet à l'intérieur du deuxième alésage de la deuxième tige, au-delà de l'orifice latéral de la deuxième tige, et portant à son extrémité libre un piston monté coulissant de façon étanche dans ledit alésage, et du côté opposé une quatrième tige montée coulissante dans le trou de passage dans la paroi extérieure de la troisième chambre. Le composant moteur agit par poussée sur la quatrième tige, à l'encontre de l'action des deux ressorts.

Les trous dans les cloisons entre les chambres et le trou dans la paroi d'extrémité de la première chambre présentent avantageusement le même diamètre.

De préférence, les deux clapets sont des clapets coniques.

La force du premier ressort est de préférence supérieure à la force du deuxième ressort et suffisante pour maintenir les deux clapets fermés après une première course axiale sous une première force du composant moteur.

La force du premier ressort est de préférence telle que le premier clapet ne puisse être ouvert qu'après une deuxième course du composant moteur avec une deuxième force supérieure à la somme des forces du premier ressort et du deuxième ressort.

De préférence, l'étanchéité de la première tige et de la deuxième tiges dans les trous du corps est assurée par des joints, de préférence des joints toriques, montés dans lesdits trous.

Par ailleurs, l'étanchéité du piston du deuxième ensemble mobile dans le deuxième alésage de la deuxième tige du premier ensemble mobile, est avantageusement assurée par un joint, de préférence un joint torique, monté dans ledit piston.

Le premier ressort est de préférence constitué par un ressort de compression serré entre la paroi d'extrémité de la première chambre et un épaulement de la première tige du premier ensemble mobile.

Le deuxième ressort est de préférence constitué par un ressort de compression serré entre le piston du deuxième ensemble mobile et un épaulement à l'endroit du raccordement du premier alésage avec le deuxième alésage du premier ensemble mobile.

En se référant aux dessins schématiques annexés, on va décrire ci-après plus en détail un exemple de réalisation illustratif d'une soupape à trois voies conforme à l'invention; sur les dessins :
la figure 1 est une coupe axiale de la soupape représentée en position de purge de la voie de sortie;
la figure 2 est une coupe identique à celle de la figure 1, montrant la soupape avec les deux clapets fermés;
la figure 3 est une coupe identique à celle de la figure 1, montrant la soupape avec le clapet d'entrée ouvert et le clapet de purge fermé.

La soupape à trois voies illustrée par les dessins comprend un corps 1 renfermant trois chambres 22, 12 et 16 en enfilade, avec des trous de passage 26 et 27 dans les cloisons 28 et 29 entre la première chambre 22 et la deuxième chambre 12, ainsi qu'entre la deuxième chambre 12 et la troisième chambre 16, avec un trou de passage 30 dans la paroi d'extrémité 31 opposée de la première chambre 22 et avec un trou de passage 19 dans la paroi extérieure 32 de la troisième chambre 16, tous ces trous étant alignés.

Un premier clapet conique 7 solidaire d'une première tige 4 dans la première chambre 22 et d'une deuxième tige 21 dans la deuxième chambre 12, est sollicité par un premier ressort de compression 3 intercalé entre la paroi 31 et un épaulement 35 de la tige sur un premier siège 8 défini par le trou 26 dans la cloison 28 séparant la première chambre 22 de la deuxième chambre 12.

La première tige 4 sort du corps 1 par le trou 30 de la paroi 31, l'étanchéité étant assurée par un premier joint torique 2 monté dans le trou 30. La deuxième tige 21 s'étend de la deuxième chambre 12 dans la troisième chambre 16 à travers le trou 27 de la cloison 29, un deuxième joint torique 13 monté dans le trou 27 assurant l'étanchéité de la deuxième tige 21 dans le trou 27. La troisième chambre 16 communique à l'air libre.

Le premier ensemble mobile comprenant le premier clapet 7, la première tige 4 et la deuxième tige 21, est traversé axialement par un canal comprenant un premier alésage 5 dans la première tige 4 et un deuxième alésage 14 de plus grand diamètre dans la deuxième tige 21.

Une troisième tige 33 d'un deuxième ensemble mobile comprenant par ailleurs un deuxième clapet 20 et une quatrième tige 34 est engagée, depuis l'extrémité libre de la deuxième tige 21, dans l'alésage 14 de cette dernière. La troisième tige 33 porte, à son extrémité libre, un piston 10 comportant un troisième joint torique 9 assurant l'étanchéité du piston 10 dans l'alésage 14. Un deuxième ressort de compression 6 est intercalé entre le piston 10 et l'épaulement 36 entre le deuxième alésage 14 et le premier alésage 5.

Plusieurs orifices radiaux 11 1 sont ménagés dans la deuxième tige 21, dans la zone de la deuxième chambre 12, entre le piston 10 et le deuxième joint 13.

L'entrée ou débouché du deuxième alésage 14, à l'extrémité libre de la deuxième tige 21, constitue un deuxième siège 15 pour le deuxième clapet 20. Ce deuxième clapet 20 situé dans la troisième chambre 16 peut être appliqué sur le siège 15 sous la force d'un composant moteur 17 situé à l'extérieur du corps 1 et agissant sur le deuxième clapet 20 par poussée sur la quatrième tige 34 guidée dans le trou 19 de la paroi 32.

Les diamètres du premier siège 8, de la première tige 4 au niveau du premier joint 2, et de la deuxième tige 21 au niveau du deuxième joint 13, sont identiques. Ainsi, le premier ensemble mobile composé du premier clapet 7, de la première tige 4 et de la deuxième tige 21, est équilibré par rapport à toutes valeurs de pression de fluide régnant dans la première chambre 22 et/ou dans la deuxième chambre 12.

Le diamètre du piston 10 est identique au diamètre d'étanchéité du deuxième siège 15 (diamètre de l'alésage 14). Par conséquent, le deuxième ensemble mobile composé du piston 10, de la tige 33, du deuxième clapet 20 et de la tige 34, est équilibré par rapport à la pression dans la deuxième chambre 12.

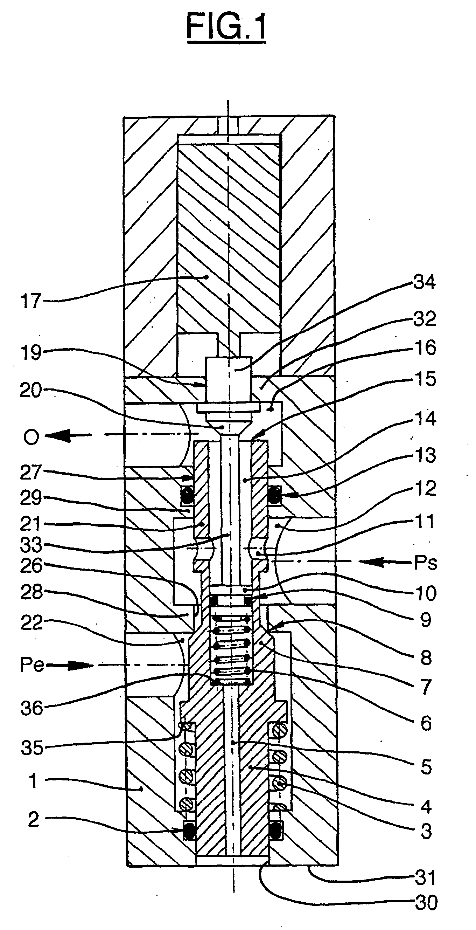

Selon la figure 1, le composant moteur 17 qui peut être par exemple un électro-aimant n'est pas actionné, de sorte que le premier ressort 3 maintient le premier clapet 7 fermé et le deuxième ressort 6 ouvre le deuxième clapet 20. Dans cet état, la deuxième chambre 12 est purgée à l'air libre, sa pression diminue.

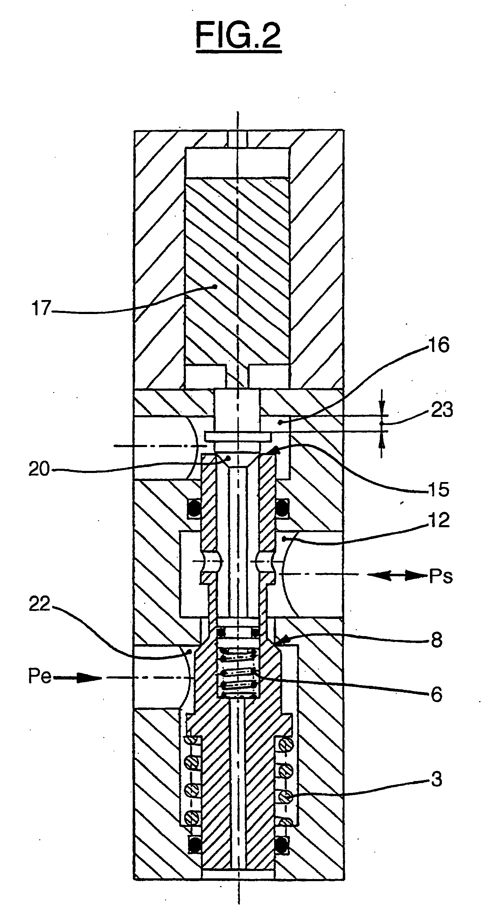

Selon la figure 2, le composant moteur 17 est actionné et déplace le deuxième clapet 20 d'une première course 23 à l'encontre de l'action du deuxième ressort 6, de sorte que le deuxième siège 15 est fermé; le premier ressort 3 est suffisamment fort pour que l'étanchéité au premier siège 8 et au deuxième siège 15 soit maintenue; ainsi, cet état correspond à l'équilibre en régulation, les trois chambres 22, 12 et 16 étant isolées.

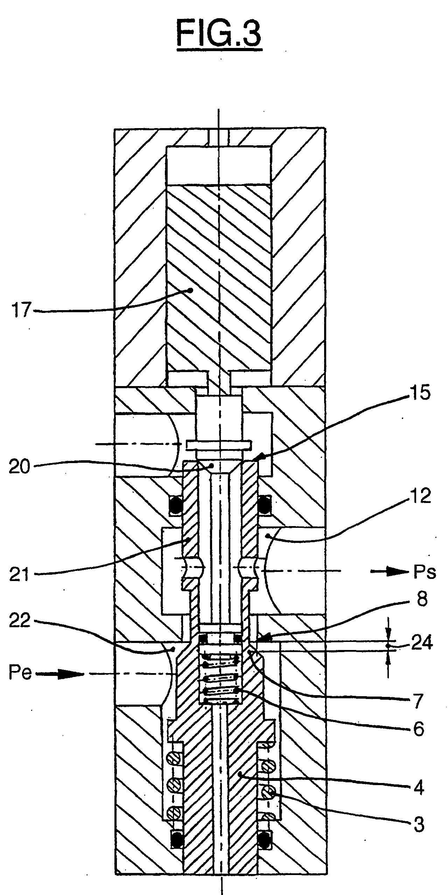

Selon la figure 3, sous une action plus puissante du composant moteur 17, les deux ensembles comprenant le deuxième clapet 20, la deuxième tige 21, le premier clapet 7 et la première tige 4, se déplacent d'une deuxième course 24, ce qui fait que le premier siège 8 s'ouvre, le deuxième siège 15 restant fermé sous l'effet de la somme des forces du premier ressort 3 et du deuxième ressort 6. Dans cette position, le fluide sous haute pression peut passer de la première chambre 22 dans la deuxième chambre 12 en augmentant la pression dans cette dernière.

## Revendications

1. Soupape à trois voies pour régulation de pression de fluide, comprenant un ensemble de deux clapets (7, 20) qui sont montés en empilage axial, en étant mobiles axialement par rapport à deux sièges (8, 15), dans un corps (1) présentant trois chambres (22, 12, 16) en enfilade, avec des trous de passage (26, 27, 30, 19) alignés dans les cloisons (28, 29) entre la première chambre (22) et la deuxième chambre (12) et entre la deuxième chambre (12) et la troisième chambre (16), ainsi que dans les parois extérieures (31, 32) des première et troisième chambres (22, 12), et qui sont actionnés par un composant moteur (17) disposé à l'extérieur dudit corps (1), avec un premier ressort (3) sollicitant le premier clapet (7) contre le premier siège (8) et avec un deuxième ressort (6) écartant le deuxième clapet (20) du deuxième siège (15), **caractérisé par le fait qu'**elle comprend,
- un premier ensemble mobile comprenant un premier clapet (7) monté mobile axialement dans la première chambre (22) de manière à coopérer avec un premier siège (8) défini par le trou (26) entre la première chambre (22) et la deuxième chambre (12), d'un côté du premier clapet (7) une première tige (4) montée coulissante de façon étanche, dans le trou (30) de la paroi extérieure (31) de la première chambre (22) et, sur le côté opposé, une deuxième tige (21) qui traverse la deuxième chambre (12) et est montée coulissante de façon étanche dans le trou (27) de la cloison (29) entre la deuxième chambre (12) et la troisième chambre (16), le premier ensemble mobile étant traversé axialement sur toute sa longueur par un canal comprenant un premier alésage (5) dans la première tige (4) et un deuxième alésage (14) dans la deuxième tige (21), cette dernière présentant au moins un orifice latéral (11) dans la zone de la deuxième chambre (12), et
- un deuxième ensemble mobile comprenant un deuxième clapet (20) monté mobile axialement dans la troisième chambre (16) de manière à coopérer avec un deuxième siège (15) défini par le débouché du deuxième alésage (14) à l'extrémité libre de la deuxième tige (21), d'un côté du deuxième clapet (20) une troisième tige (33) s'étendant avec du jeu depuis le deuxième clapet à l'intérieur du deuxième alésage (14) de la deuxième tige (21), au-delà de l'orifice latéral (11) de la deuxième tige, et portant à son extrémité libre un piston (10) monté coulissant de façon étanche dans ledit alésage, et du côté opposé une quatrième tige (34) montée coulissante dans le trou de passage (19) dans la paroi extérieure (32) de la troisième chambre (16), et
- que le composant moteur (17) agit par poussée sur la quatrième tige (34), à l'encontre de l'action des deux ressorts (3, 6).

2. Soupape suivant la revendication 1, **caractérisée par le fait que** les trous (26, 27) dans les cloisons (28, 29) et le trou (30) dans la paroi extérieure (31) de la première chambre présentent le même diamètre.

3. Soupape suivant la revendication 1 ou 2, **caractérisée par le fait que** le diamètre du piston (10) est égal au diamètre d'étanchéité du deuxième siège (15).

4. Soupape suivant l'une quelconque des revendications précédentes, **caractérisée par le fait que** le premier clapet (7) et le deuxième clapet (20) sont des clapets coniques.

5. Soupape suivant l'une quelconque des revendications précédentes, **caractérisée par le fait que** la force du premier ressort (3) est supérieure à la force du deuxième ressort (6) et suffisante pour maintenir les deux clapets (7,20) fermés sur leurs sièges (8, 15) après une première course axiale (23) sous une première force du composant moteur (17).

6. Soupape suivant la revendication 5, **caractérisée par le fait que** la force du premier ressort (3) est telle que l'ouverture du premier siège (8) ne puisse se produire qu'après une deuxième course axiale (24) des deux ensembles mobiles, le deuxième siège (15) étant fermé par le deuxième clapet (20), sous une deuxième force du composant moteur (17) supérieure à la somme des forces du premier ressort (3) et du deuxième ressort (6).

7. Soupape suivant l'une quelconque des revendications précédentes, **caractérisée par le fait que** l'étanchéité de la première tige (4) et de la deuxième tige (21) dans les trous (30, 27) est assurée par des joints (2, 13), de préférence des joints toriques, montés dans lesdits trous.

8. Soupape suivant l'une quelconque des revendications précédentes, **caractérisée par le fait que** l'étanchéité du piston (10) dans le deuxième alésage (14) de la deuxième tige (21) est assurée par un joint (9), de préférence un joint torique, monté dans ledit piston.

9. Soupape suivant l'une quelconque des revendications précédentes, **caractérisée par le fait que** le premier ressort est un ressort de compression (3) intercalé entre la paroi extérieure (31) de la première chambre (22) et un épaulement (35) de la première tige (4).

10. Soupape suivant l'une quelconque des revendications précédentes, **caractérisée par le fait que** le deuxième ressort est un ressort de compression (6) intercalé entre le piston (10) et un épaulement (36) entre le premier alésage (5) et le deuxième alésage (14).

## Patentansprüche

1. Dreiwegeventil zum Regeln des Druckes eines Fluides mit einer Anordnung aus zwei Ventilkörpern (7, 20), die axial gestapelt und axial beweglich bezüglich zweier Sitze (8, 15) in einem Körper (1) angeordnet sind, der drei in Reihe angeordnete Kammern (22, 12, 16) aufweist, mit Durchgangsöffnungen (26, 27, 30, 19), die in den Zwischenwänden (28, 29) zwischen der ersten Kammer (22) und der zweiten Kammer (12) und zwischen der zweiten Kammer (12) und der dritten Kammer (16) sowie in den Außenwänden (31, 32) der ersten und der dritten Kammer (22, 12) zu einander ausgerichtet angeordnet sind, und die von einem Antriebselement (17) betätigt werden, das außen am Körper (1) angeordnet ist, mit einer ersten Feder (3), die den ersten Ventilkörper (7) gegen den ersten Sitz (8) beaufschlagt, und einer zweiten Feder (6), die den zweiten Ventilkörper (20) vom zweiten Sitz (15) fernhält, **dadurch gekennzeichnet, daß** es
- eine erste bewegliche Anordnung mit einem ersten Ventilkörper (7), der axial beweglich in der ersten Kammer (22) so angeordnet ist, daß er mit einem Sitz (8) zusammenarbeitet, der durch die Öffnung (26) zwischen der ersten Kammer (22) und der zweiten Kammer (12) gebildet ist, einer auf einer Seite des ersten Ventilkörpers (7) vorgesehen ersten Stange (4), die gleitend verschiebbar und dicht in der Öffnung (30) der Außenwand (31) der ersten Kammer (22) angeordnet ist, und einer auf der gegenüberliegenden Seite angeordneten zweiten Stange (21), die quer durch die zweite Kammer (12) geht und gleitend verschiebbar dicht in der Öffnung (27) der Zwischenwand (29) zwischen der zweiten Kammer (12) und der dritten Kammer (16) angeordnet ist, wobei die erste bewegliche Anordnung axial über ihre gesamte Länge von einem Kanal durchzogen ist, der eine erste Bohrung (5) in der ersten Stange (4) und eine zweite Bohrung (14) in der zweiten Stange (21) umfaßt, und wobei letztere wenigstens eine seitliche Öffnung (11) im Bereich der zweiten Kammer (12) aufweist, und
- eine zweite bewegliche Anordnung mit einem zweiten Ventilkörper (20), der axial beweglich in der dritten Kammer (16) so angeordnet ist, daß er mit einem zweiten Sitz (15) zusammenarbeitet, der durch den Ausgang der zweiten Bohrung (14) am freien Ende der zweiten Stange (21) gebildet ist, einer auf einer Seite des zweiten Ventilkörpers (20) angeordneten dritten Stange (33) die mit Spiel vom zweiten Ventilkörper im Inneren der zweiten Bohrung (14) der zweiten Stange (21) an der seitlichen Öffnung (11) der zweiten Stange vorbei läuft und an ihrem freien Ende einen Kolben (10) trägt, der gleitend verschiebbar dicht in dieser Bohrung angeordnet ist, und einer auf der gegenüberliegenden Seite angeordneten vierten Stange (34) umfaßt, die gleitend verschiebbar in der Durchgangsöffnung (19) in der Außenwand (32) der dritten Kammer (16) angeordnet ist, und
- das Antriebselement (17) durch Druck auf die Stange (34) gegen die Wirkung der beiden Feder (3, 6) einwirkt.

2. Ventil nach Anspruch 1, **dadurch gekennzeichnet, daß** die Öffnungen (26, 27) in den Zwischenwänden (28, 29) und die Öffnung (30) in der Außenwand (31) der ersten Kammer den gleichen Durchmesser haben.

3. Ventil nach Anspruch 1 oder 2, **dadurch gekennzeichnet, daß** der Durchmesser des Kolbens (10) gleich einem Durchmesser der Dichtheit des zweiten Sitzes (15) ist.

4. Ventil nach einem der vorhergehenden Ansprüche, **dadurch gekennzeichnet, daß** der erste Ventilkörper (7) und der zweite Ventilkörper (20) konische Ventilkörper sind.

5. Ventil nach einem der vorhergehenden Ansprüche, **dadurch gekennzeichnet, daß** die Kraft der ersten Feder (3) größer als die Kraft der zweiten Feder (6) ist und ausreicht, um die beiden Ventilkörper (7, 20) an ihren Sitzen (8, 15) nach einem ersten axialen Hub (23) unter einer ersten Kraft des Antriebselementes (17) geschlossen zu halten.

6. Ventil nach Anspruch 5, **dadurch gekennzeichnet, daß** der ersten Feder (3) derart ist, daß die Öffnung des ersten Sitzes (8) nur nach einem zweiten axialen Hub (24) der beiden beweglichen Anordnungen möglich ist, wobei der zweite Sitz (15) durch den zweiten Ventilkörper (20) unter einer zweiten Kraft des Antriebselementes (17) geschlossen ist, die über der Summe der Kräfte der ersten Feder (3) und der zweiten Feder (6) liegt.

7. Ventil nach einem der vorhergehenden Ansprüche, **dadurch gekennzeichnet, daß** die Dichtheit der ersten Stange (4) und der zweiten Stange (21) in den Öffnungen (30, 27) durch Dichtungen (2, 13), vorzugsweise torische Dichtungen, gewährleistet ist, die in diesen Öffnungen angeordnet sind.

8. Ventil nach einem der vorhergehenden Ansprüche, **dadurch gekennzeichnet, daß** die Dichtheit des Kolbens (10) in der zweiten Bohrung (14) der zweiten Stange (21) durch eine Dichtung (9), vorzugsweise eine torische Dichtung, gewährleistet ist, die in diesem Kolben angeordnet ist.

9. Ventil nach einem der vorhergehenden Ansprüche, **dadurch gekennzeichnet, daß** die erste Feder eine Kompressionsfeder (3) ist, die zwischen der Außenwand (31) der ersten Kammer (22) und einer Schulter (35) der ersten Stange (4) angeordnet ist.

10. Ventil nach einem der vorhergehenden Ansprüche, **dadurch gekennzeichnet, daß** die zweite Feder eine Kompressionsfeder (6) ist, die zwischen dem Kolben (10) und einer Schulter (36) zwischen der ersten Bohrung (5) und der zweiten Bohrung (14) angeordnet ist.

## Claims

1. A three-port fluid pressure regulator valve, including a set of two axially stacked pistons (7, 20), mobile axially relative to two seats (8, 15), in a body (1) having three cascaded chambers (22, 12, 16), with aligned holes (26, 27, 30, 19) in the partitions (28, 29) between the first chamber (22) and the second chamber (12) and between the second chamber (12) and the third chamber (16), as well as in the inside walls (31, 32) of the first and third chambers (22, 12), which pistons are actuated by an actuator (17) outside said body (1), with a first spring (3) spring-loading the first piston (7) against the first seat (8) and a second spring (6) lifting the second piston (20) off the second seat (15), **characterized in that** it includes:
- a first mobile assembly comprising a first piston (7) mobile axially in the first chamber (22) to co-operate with a first seat (8) defined by the hole (26) between the first chamber (22) and the second chamber (12), on one side of the first piston (7) a first rod (4) mounted to slide in and sealed to the hole (30) in the outside wall (31) of the first chamber (22) and, on the opposite side thereof, a second rod (21) that passes through the second chamber (12) and is mounted to slide in and sealed to the hole (27) in the partition (29) between the second chamber (12) and the third chamber (16), a passage passing axially throughout the length of the first mobile assembly and having a first bore (5) in the first rod (4) and a second bore (14) in the second rod (21), the latter bore having at least one lateral orifice (11) in the area of the second chamber (12), and
- a second mobile assembly comprising a second piston (20) mounted to move axially in the third chamber (16) so as to co-operate with a second seat (15) defined by the outlet of the second bore (14) at the free end of the second rod (21), on one side of the second piston (20) a third rod (33) extending with clearance from the second piston to the interior of the second bore (14) of the second rod (21), beyond the lateral orifice (11) of the second rod, and carrying at its free end a piston (10) mounted to slide in and sealed to said bore, and on the opposite side thereof a fourth rod (34) mounted to slide in the hole (19) in the outside wall (32) of the third chamber (16),
- and **in that** the actuator (17) operates by pushing on the fourth rod (34) against the action of the two springs (3, 6).

2. A valve according to claim 1, **characterized in that** the holes (26, 27) in the partitions (28, 29) and the hole (30) in the outside wall (31) have the same diameter.

3. A valve according to claim 1 or claim 2, **characterized in that** the diameter of the piston (10) is equal to the sealing diameter of the second seat (15).

4. A valve according to any preceding claim, **characterized in that** the first piston (7) and the second piston (20) are conical pistons.

5. A valve according to any preceding claim, **characterized in that** the force of the first spring (3) is greater than the force of the second spring (6) and sufficient to hold the two pistons (7, 20) closed on their seats (8, 15) after a first axial stroke (23) with the actuator (17) operating with a first force.

6. A valve according to claim 5, **characterized in that** the force of the first spring (3) is such that the first seat (8) can be opened only after a second axial stroke (24) of the two mobile assemblies, the second seat (15) being closed by the second piston (20), with the actuator (17) operating at a second force higher than the sum of the forces of the first spring (3) and the second spring (6).

7. A valve according to any preceding claim, **characterized in that** the first rod (4) and the second rod (21) are sealed to the holes (30, 27) by seals (2, 13), preferably O-rings, mounted in said holes.

8. A valve according to any preceding claim, **characterized in that** the piston (10) is sealed to the second bore (14) in the second rod (21) by a seal (9), preferably an O-ring, mounted in said piston.

9. A valve according to any preceding claim, **characterized in that** the first spring is a compression spring (3) between the outside wall (31) of the first chamber (22) and a shoulder (35) on the first rod (4).

10. A valve according to any preceding claim, **characterized in that** the second spring is a compression spring (6) between the piston (10) and a shoulder (36) between the first bore (5) and the second bore (14).
